Europäisches Patentamt

European Patent Office

Office européen des brevets

(19)

(11) Publication number: **0 190 656**
A2

(12)                    # EUROPEAN PATENT APPLICATION

(21) Application number: **86101160.9**

(22) Date of filing: **29.01.86**

(51) Int. Cl.⁴: **B 29 D 11/00**

(30) Priority: **31.01.85 JP 17808/85**

(43) Date of publication of application:
**13.08.86 Bulletin 86/33**

(84) Designated Contracting States:
**BE DE FR GB IT NL**

(71) Applicant: **SUMITOMO CHEMICAL COMPANY, LIMITED**
**15 Kitahama 5-chome Higashi-ku**
**Osaka-shi Osaka 541(JP)**

(72) Inventor: **Tatsukami, Yoshiharu**
**2-8-2, Kitasakurazuka**
**Toyonaka-shi Osaka-fu(JP)**

(72) Inventor: **Fujita, Katsuramaru**
**4-2-9, Niina, Mino-shi**
**Osaka-fu(JP)**

(72) Inventor: **Furuta, Motonobu**
**2-29-7, Ohika**
**Ibaraki-shi Osaka-fu(JP)**

(72) Inventor: **Tamura, Toshifumi**
**7-733, No 431 Kamisugeta-cho Hodogaya-ku**
**Yokohama-shi Kanagawa-ken(JP)**

(74) Representative: **von Kreisler, Alek, Dipl.-Chem. et al,**
**Deichmannhaus am Hauptbahnhof**
**D-5000 Köln 1(DE)**

(54) **Method for producing plastic optical fiber with heat resistance.**

(57) A plastic optical fiber with excellent heat resistance comprising a core made of a polymer comprising units of methyl methacrylate and a cladding made of a polymer containing at least 20% by weight of fluorine is produced by washing the core polymer with an organic solvent in which the core polymer is substantially insoluble, forming the core from the washed core polymer and forming the cladding around the core.

EP 0 190 656 A2

0190656

## METHOD FOR PRODUCING PLASTIC OPTICAL FIBER

## WITH HEAT RESISTANCE

### FIELD OF THE INVENTION

The present invention relates to a method for producing a plastic optical fiber with heat resistance. More particularly, it relates to a method for producing a plastic optical fiber comprising a core and a cladding with improved heat resistance as well as low attenuation of light transmission.

### BACKGROUND OF THE INVENTION

Conventional optical fibers are made from glass material and widely used as optical signal-transmitting mediums for instrumentation between instruments or in an instrument, for transmission of data, for medical use, for decoration, for transmission of image, etc. However, they are poor in flexibility when their diameter are not small enough. Further, they are relatively fragile and apt to be broken by impact. Furthermore, they are heavy, because their specific gravity is comparatively large. In addition, the optical fibers themselves as well as their connectors are expensive. Due to these drawbacks, attempt has been made to replace glass material by plastic materials.

The advantages with plastic materials are numerous. For instance, the resulting optical fibers are light, tough and flexible so that their diameters and numerical aperture can be made large. Further, for instance, their handling is easy and can be readily connected to light emitting and/or accepting elements. In general, a plastic optical fiber comprises a core made of a plastic material having a larger refractive index and a good optical transmission and a cladding made of a plastic material having a smaller refractive index and a high transparency. In this structure, light is transmitted by reflection at the interface between the core and the cladding. Larger difference in refractive index between the plastic material of the core and of the cladding provides the optical fiber with better optical transmission. As plastic material having good optical transmission, amorphous plastic are preferred, example of which are polymethyl methacrylate, polystyrene, etc. (cf. Japanese Patent Publication Nos. 8978/1968 and 21660/1978).

Japanese Patent Kokai Publication (unexamined) No. 221808/1983 discloses a plastic optical fiber with good heat resistance and optical transmission comprising a core and a cladding, wherein the core is made of a polymer comprising units of a methacrylate ester the ester moiety of which has an alicyclic hydrocarbon of at least 8 carbon atoms, and the cladding is made of a transparent polymeric material having a refractive index of at least 3 % smaller than that of the core. Some of the core material used in the plastic optical fiber of the above publication is, however, desired to be improved in long-time heat resistance and attenuation of

- 3 -

**0190656**

light transmission although they have satisfactory short-time heat resistance.

## SUMMARY OF THE INVENTION

One object of the present invention is to provide a method for producing a plastic optical fiber having not only short-time heat resistance but also long-time heat resistance.

Another object of the present invention is to provide a method for producing a plastic optical fiber having low attenuation of light transmission.

Further object of the present invention is to provide a method for producing a plastic optical fiber having good adhesivity between the core and the cladding.

Accordingly, the present invention provides a method for producing a plastic optical fiber with heat resistance comprising a core made of a polymer comprising units of methyl methacrylate and a cladding made of a polymer containing at least 20 % by weight of fluorine, which method comprises washing the core polymer with an organic solvent in which the core polymer is substantially insoluble, forming the core from the washed core polymer and forming the cladding around the core.

## DETAILED DESCRIPTION OF THE INVENTION

The polymer to be used for the core material is preferably a homopolymer of methyl methacrylate or a copolymer comprising at least 60 % by weight of units of methyl methacrylate. Preferred comonomers to be copolymerized with methyl methacrylate are other alkyl methacrylate (e.g. ethyl methacrylate, propyl methacrylate, butyl methacrylate, isobutyl methacrylate and cyclohexyl methacrylate), methacrylic ester the ester moiety of which has alicyclic hydrocarbon of 8 to 20 carbon atoms, etc. The copolymer may further comprises 10 % by weight or less of alkyl acrylate (e.g. methyl methacrylate, ethyl acrylate and 2-ethylhexyl acrylate). Among them, a copolymer comprising at least 70 % by mole of units of methyl methacrylate is preferred since it is highly pure and transparent and easily available.

The methacrylate ester the ester moiety of which has the alicyclic hydrocarbon group having 8 to 20 carbon atoms may be prepared by esterifying methacrylic acid or its chloride with a monohydric alcohol of the formula: ROH wherein R is the above defined alicyclic hydrocarbon group. Specific examples of the monohydric alicyclic alcohol are 1-adamantanol, 2-adamantanol, 3-methyl-1-adaman-tanol, 3,5-dimethyl-1-adamantanol, 3-ethyladamantanol, 3-methyl-5-ethyl-1-adamantanol, 3,5,8-triethyl-1-adamantanol, 3,5-dimethyl-8-ethyl-1-adamantanol, octahydro-4,7-methano-inden-5-ol, octahydro-4,7-methanoinden-1-ylmethanol, p-menthanol-8, p-menthanol-2, 3-hydroxy-2,6,6-trimethyl-bicyclo[3.1.1]heptane, 3,7,7-trimethyl-4-hydroxy-bicyclo[4.1.0]heptane, borneol, 2-methylcamphanol, fenchyl alcohol, ℓ-menthol, 2,2,5-trimethylcyclohexanol, etc. The corresponding methacrylic esters of these monohydric alcohols are favorably usable. Particularly favorable are 1-adamantyl methacrylate, 2-adamantyl methacrylate, 3,5-dimethyl-1-adamantyl methacrylate, bornyl methacrylate, p-menthan methacrylate, 2-methylcamphan methacrylate, fenchyl methacrylate, ℓ-menthyl methacrylate, 2,2,5-trimethylcyclohexyl methacrylate.

The polymer for the cladding material which is another important element of the plastic optical fiber according to the present invention is a fluorine-containing polymer containing at least 20 % by weight of fluorine. Preferred fluorine-containing polymers are fluorine-containing resins, fluorine-containing thermoplastic elastomers and fluorine-containing elastomers. Specific examples of the fluorine-containing resins are homo- or co-polymer comprising fluoroalkyl α-fluoroacrylate, alkyl α-fluoroacrylate, fluoroalkyl methacrylate and/or a fluorine-containing olefin.

The polymer of fluoroalkyl α-fluoroacrylate, alkyl α-fluoroacrylate or fluoroalkyl methacrylate preferably has a softening point of not lower than 50°C in case of the homopolymer and a refractive index of not larger than 1.43. Preferred examples of fluoroalkyl α-fluoroacrylate and fluoroalkyl methacrylate are 2,2,2-trifluoroethyl α-fluoroacrylate, 1,1,1,3,3,3-hexafluoro-2-propyl α-fluoroacrylate, 1,1-diethyl-2,2,3,4,4,4-hexafluoro-1-butyl α-

fluoroacrylate, 1-propyl-2,2,3,4,4,4-hexafluoro-1-butyl α-fluoroacrylate, 1,1-dimethyl-3-trifluoromethyl-2,2,4,4,4-pentafluorobutyl α-fluoroacrylate, 2-trifluoromethyl-2,2,3,3-tetrafluoropropyl α-fluoroacrylate, 2,2,3,3-tetrafluoropropyl α-fluoroacrylate, 1,1-dimethyl-2,2,3,3-tetrafluoropropyl α-fluoroacrylate, 2-trifluoromethyl-3,3,3-trifluoropropyl α-fluoroacrylate, and corresponding fluoroalkyl methacrylate. Preferred examples of alkyl α-fluoroacrylate are methyl α-fluoroacrylate, ethyl α-fluoroacrylate and propyl α-fluoroacrylate. Among them, 2,2,2-trifluoroethyl α-fluoroacrylate and methacrylate, 2,2,3,3-tetrafluoropropyl α-fluoroacrylate and methacrylate, 1,1-dimethyl-2,2,3,3-tetrafluoropropyl α-fluoroacrylate and methacrylate, 2-trifluoromethyl-3,3,3-trifluoropropyl α-fluoroacrylate and methacrylate, 2,2,3,3,3-pentafluoropropyl methacrylate, 1,1,1,3,3,3-hexafluoro-2-propyl α-fluoroacrylate and methacrylate and methyl α-fluoroacrylate are most preferred.

Specific examples of the fluorine-containing polyolefin are vinylidene fluoride-tetrafluoroethylene copolymer, trifluoroethylene-vinylidene fluoride copolymer, vinylidene fluoride-tetrafluoroethylene-hexafluoropropene terpolymer, etc.

The term "fluorine-containing thermoplastic elastomer" as herein used is intended to mean polymers which comprises soft segments of fluorine-containing elastomers and hard segments of florine-containing resins and can be physically vulcanized in the part of fluorine-containing resins at room temperature to show a rubbery elasticity and behave as thermoplastics at high temperature over the melting point. A typical example of the thermoplastic elastomer is "Dai-el" (trade mark) thermoplastic manufactured by Daikin Industries Ltd.

Specific examples of the fluorine-containing elastomer are vinylidene fluoride-hexafluoropropene copolymer, vinylidene fluoride-pentafluoropropene copolymer, vinylidene fluoride-chlorotrifluoroethylene copolymer, etc. Among them, vinylidene fluoride-hexafluoropropene copolymer is preferred.

The polymer to be used as the core material may be prepared by a per se conventional polymerization procedure such as suspension polymerization or bulk polymerization. In these preparation, a great care should be taken to prevent the contamination of any foreign material into the produced polymer. For instance, the suspension polymerization usually requires the use of water in a great amount so that any foreign material contained therein tends to be included in the produced polymer. Any foreign material may also contaminate the produced polymer during the operation of dehydration therefrom. Therefore, the foreign materials are preferably removed by filtration in case of the suspension polymerization.

0190656

In one of the favorable procedures for preparation of the optical fiber of the invention, the production of the polymer for the core materials comprising the continuous bulk polymerization at an elevated temperature and the subsequent continuous elimination of volatile materials containing unreacted monomers from the polymerization product, and the manufacture of the optical fiber are carried out successively.

The polymerization may be initiated by the use of a radical initiator, examples of which are azo compounds (e.g. 2,2'-azobis(isobutyronitrile), 1,1'-azobis(cyclo-hexanecarbonitrile), 2,2'-azobis(2,4-dimethylvaleronitrile), azobisisobutanol diacetate and azo-t-butane), organic peroxides (e.g. di-t-butyl peroxide, dicumyl peroxide, methyl ethyl ketone peroxide, di-t-butyl perphthalate, di-t-butyl peracetate and di-t-amyl peroxide), etc. The amount of the initiator is preferably from 0.001 to 1 % by mole of the monomer to be polymerized.

In order to control the molecular weight of the polymer, a chain transfer agent may be added to the polymerization system. Specific examples of the chain transfer agent are t-butylmercaptan, n-butylmercaptan, n-octylmercaptan, n-dodecylmercaptan, etc. The amount of the chain transfer agent is usually not more than 1 % by mole of the monomer to be polymerized.

According to the present invention, the produced polymer for the core material is washed with the organic solvent in which the polymer is substantially insoluble before the manufacture of the plastic optical fiber.

The organic solvent preferably used is one in that the polymer for the core material insoluble or that causes swelling or cracking of the polymer at a temperature of room temperature to 60°C. Specific examples of the organic solvent are methanol, ethanol, n-propanol, isopropanol, n-butanol, solvent naphtha, tetrachloroethylene, nitrobenzene, monochlorobenzene, dichlorobenzene, diethyl ether, cyclohexene, etc. and mixtures thereof. Among them, methanol is preferred in commercial production of the plastic optical fiber. The organic solvent is purified by distillation or by filtration by means of a microporous film to remove a trace amount of impurity or minute dust and used to wash the polymer for the core material.

The distillation of the organic solvent can be carried out by a per se conventional method. The microporous film is made of, preferably, polytetrafluoroethylene or polyolefin and has micropores having diameter of less than 10 μm, preferably less than 1 μm, more preferably less than 0.1 μm through the wall thickness of the film.

The washing of the polymer for the core material with the organic solvent may be carried out by stirring, flowing or dipping. For example, the polymer in the form of beads or pellets is charged in a vessel equipped with a stirrer which has been cleaned, and then 2 to 10 time volume of the organic solvent is added. The mixture is stirred at a temperature of room temperature to 60°C. The washing time depends on the kinds of the polymer and of the solvent and temperature. It is usually from 30 minutes to 3 hours and, in case of methanol, from 30 minutes to 1 hour.

The polymer to be washed is preferably of bead or pellet form to increase washing effect.

The reason why the washing of the polymer for the core material with the organic solvent improves the heat resistance and attenuation of light transmission of the produced optical fiber has not been clarified but supposed that the residual monomers present in or on the polymer and/or by-products such as low molecular weight compounds may be washed out or extracted and removed from the polymer.

The production of the polymer for the cladding material may be also accomplished in a per se conventional polymerization procedure such as suspension or bulk polymerization. However, such great care as taken in the preparation of the core material is not needed since the presence of the contamination in the cladding does not affect the light transmission so greatly as in case of the core. Usually, the monomer of the cladding material is filtered before polymerization to remove foreign materials.

0190656

The plastic optical fiber comprising the core and the cladding can be manufactured by a per se conventional method. For example, it is manufactured by extruding the core material and the cladding material from a special nozzle to form a core-cladding structure (so-called a composit spinning method) or by spinning the core material to form a core fiber, coating a solution of the cladding material in a suitable solvent on the surface of the core fiber and then removing the solvent to form the cladding around the core (so-called a coating method).

The weight ratio of the core material and the cladding material is from about 70:30 to 98:2, preferably from about 80:20 to 95:5. The optical fiber of the invention has usually a diameter of about 0.15 mm to 1.5 mm, preferably about 0.20 to 1.0 mm.

The optical fiber produced by the method according to the present invention can be used in a wider temperature range than the conventional plastic optical fiber and has excellent heat resistance and humidity resistance.

Since the optical fiber is stable even at a high temperature above 110°C, it can be applied to automobiles, vessels, aircrafts, robots, etc. Further, it will find wide application in communication in premises or building since it can be used in wider temperature and/or humidity ranges.

Practical and presently preferred embodiments of the present invention are shown in the following Examples, in which parts and % are by weight unless otherwise
indicated.

In these examples, the attenuation of light transmission was measured as follows:

As the illuminant, a halogen-tungsten lamp was
employed. Using a diffraction grating spectrophotometer,
the intensities of the outputs form the optical fiber to be
tested and from the standard optical fiber at a wavelength
of 650 nm were read off by means of silicone photodiode.
The attenuation of light transmission (A) was calculated
according to the following equation:

$$A \text{ (dB/Km)} = \frac{10}{L} \log \left(\frac{I}{I_o}\right)$$

wherein L is the length of the optical fiber (Km), $I_o$ is the
intensity of the light at the entrance and I is the intensity of light at the exit.

Flexibility was examined by knotting the optical
fiber of 15 mm in length and drawing the both ends at a rate
of 2 mm/min. to measure knot strength at break.

The heat resistance of the optical fiber was
evaluated by heating the optical fiber at a predetermined
temperature for a predetermined period of time and comparing
the optical transmission loss before and after heating.

Example 1

A monomeric mixture was purified by distillation
under reduced pressure, and a mixture of a suspension stabilizer (hydroxyethylcellulose in an amount of 0.08 % of the monomeric mixture), an organic peroxide (lauroyl peroxide in an amount of 0.3 % of the monomeric mixture), a molecular weight modifier (n-dodecylmercaptane in an amount of 0.16 % of the monomer mixture) and water was filtered through a micropores film having a pore size of 0.1 μm. They were mixed in a nitrogen atmosphere containing substantially no suspended material and bulk polymerized to obtain a beads form polymer having a weight ratio of bornyl methacrylate : methyl methacrylate : methyl acrylate of 20:79:1. [η] = 0.70 (chloroform, 25°C). Refractive index = 1.49. To 25 parts of the produced polymer, 100 parts of methanol, which had been filtered through a microporous film having a pore size of 0.05 μm, was added and stirred at 30°C for one hour. After filtering the polymer beads, they were washed with 20 parts of methanol and dried by hot air at 90°C for 4 hours. The polymer was then supplied to a vented extruder heated at 220°C and extruded from a central portion of a coextruder die heated at 210°C to form a strand of 7 mm in diameter as a core, while a terpolymer of 2,2,3,3-tetra-fluoropropyl α-fluoroacrylate, methyl methacrylate and methyl acrylate (weight ratio of 87:10:3; refractive index = 1.41; melt viscosity (210°C) = 3 x $10^4$ poise) was melt coated on the surface of the core strand to form a strand in a core-cladding structure having a diameter of 1 mm and a degree of heat shrinking rate of 70 %. The thickness of the cladding was 10 μm.

0190656

The attenuations of light transmission of the plastic optical fiber at wavelength of 650 nm at 25°C and 90°C were 220 dB/Km at the both temperatures. The attenuations at the same wavelength after heated at 126°C for 168 hours were 230 dB/Km at the both temperatures. These results mean that the optical fiber has good heat resistance. The knot strength was 6.2 Kg/mm$^2$.

<u>Examples 2 to 5</u>

In the same manner as in Example 1 but using polymers as shown in Table 1 and organic solvents to wash the core polymers at predetermined temperatures, plastic optical fibers were prepared. Their attenuations of light transmission before and after heating and knot strength are shown in Table 1. In Table 1, MMA, MA, VdF and TFE stand for methyl methacrylate, methyl acrylate, vinylidene fluoride and tetrafluoroethylene, respectively.

Table 1

| Example No. | Polymer for core | Organic solvent (washing temp) | Polymer for cladding | Die temp. (°C) | Attenuation of light transmission (dB/Km) | | Knot strength (Kg/mm$^2$) |
|---|---|---|---|---|---|---|---|
| | Monomer (%) [η] (CHCl$_3$, 25°C) | | Monomer (%) [η] (ethyl acetate, 25°C) | | Room temp. | After heating (°C x hr) | |
| 2 | Bornyl methacrylate/MMA/MA (25:70:5) (0.60) | n-Propanol (40°C) | 2,2,3,3-Tetrafluoropropyl methacrylate/ MMA/MA (87:10:3) (0.70) | 200 | 220 | 220 (120°C x 240 hrs) | 6.4 |
| 3 | ℓ-Menthyl methacrylate/MMA/MA (30:68:2) (0.90) | Tetrachloroethylene (40°C) | 1,1,1,3,3,3-Hexafluoro-2-propyl methacrylate/MA (95:5) (0.75) | 210 | 250 | 250 (120°C x 120 hrs) | 5.0 |
| 4 | Fenchyl methacrylate/MMA/MA (10:88:2) (0.65) | Solvent naphtha (20°C) | VdF/TFE (93.5:6.5 by mole) (Melt viscosity = 5x10$^3$ poise (220°C)) | 220 | 210 | 210 (115°C x 120 hrs) | 7.5 |
| 5 | MMA/ethyl acrylate (99:1) (Melt index = 1.5) | Methanol with 10 % water (60°C) | 2,2,3,3-Tetrafluoropropyl α-fluoroacrylate/MMA/MA (82:15:3) (0.60) | 210 | 220 | 220 (95°C x 240 hrs) | 8.0 |

Example 6

In the same manner as in Example 1 but using a mixture of methanol and cyclohexane in place of methanol (weight ratio of 50 : 50) for washing the polymer for the core material, washing the polymer at 30°C for 2 hours and washing the surface of the filtered polymer with 20 parts of the same mixed solvent followed by drying the polymer at 90°C for 2 hours, a plastic optical fiber was prepared. The attenuation of light transmission and knot strength of the optical fiber were the same as those of the optical fiber prepared in Example 1.

Comparative Examples 1 to 4

In the same manner as in Examples 2 to 5 but not washing the polymer with the organic solvent, plastic optical fibers were prepared.

The attenuation of light transmission and knotting strength of the optical fibers are shown in Table 2.

Table 2

| Comp. Example No. | Polymers for core and cladding | Attenuation of light trasnmission (dB/Km) | | Knot strength (Kg/mm$^2$) |
|---|---|---|---|---|
| | | Room temp. | After heating (°C x hrs) | |
| 1 | Same as Ex. 2 | 230 | 240 (110°C x 240 hrs) | 0.5 |
| 2 | Same as Ex. 3 | 250 | 300 (110°C x 120 hrs) | —— |
| 3 | Same as Ex. 4 | 210 | 400 (110°C x 120 hrs) | —— |
| 4 | Same as Ex. 5 | 200 | 350 (95°C x 24 hrs) | 4.0 |

What is claimed is:

1. A method for producing a plastic optical fiber with heat resistance comprising a core made of a polymer comprising units of methyl methacrylate and a cladding made of a polymer containing at least 20 % by weight of fluorine, which method comprises washing the core polymer with an organic solvent in which the core polymer is substantially insoluble, forming the core from the washed core polymer and forming the cladding around the core.

2. A method according to claim 1, wherein the organic solvent in which the core polymer is substantially insoluble is one selected from the group consisting of methanol, ethanol, n-propanol, isopropanol, n-butanol, solvent naphtha, tetrachloroethylene, nitrobenzene, monochlorobenzene, dichlorobenzene, diethyl ether, cyclohexene and mixtures thereof.

3. A method according to claim 1, wherein the core polymer comprises units of methyl methacrylate and 3 to 40 % by weight of a methacrylic ester the ester moiety of which has alicyclic hydrocarbon of 8 to 20 carbon atoms.

4. A method according to claim 3, wherein the methacrylic ester the ester moiety of which has alicyclic hydrocarbon of 8 to 20 carbon atoms is one selected from the group consisting of bornyl methacrylate, fenchyl methacrylate, &menthyl methacrylate, adamantyl methacrylate and dimethyladamantyl methacrylate.